Europäisches Patentamt

European Patent Office

Office européen des brevets

(19)

(11) **EP 1 326 431 A2**

(12) **EUROPÄISCHE PATENTANMELDUNG**

(43) Veröffentlichungstag:
   **09.07.2003 Patentblatt 2003/28**

(51) Int Cl.⁷: **H04N 5/217**

(21) Anmeldenummer: **02028415.4**

(22) Anmeldetag: **18.12.2002**

(84) Benannte Vertragsstaaten:
   **AT BE BG CH CY CZ DE DK EE ES FI FR GB GR
   IE IT LI LU MC NL PT SE SI SK TR**
   Benannte Erstreckungsstaaten:
   **AL LT LV MK RO**

(30) Priorität: **18.12.2001 DE 10162422**

(71) Anmelder: **Zeiss Optronik GmbH
   73447 Oberkochen (DE)**

(72) Erfinder: **Wiedmann, Wolfgang, Dipl.-Ing.
   73457 Essingen (DE)**

(74) Vertreter: **Köllner, Malte, Dr.
   Köllner & Brunotte
   Patentanwälte
   Robert-Bosch-Strasse 7
   64293 Darmstadt (DE)**

(54) **Visualisierung von extremen Kontrastunterschieden bei Kamerasystemen**

(57) Zum Darstellen eines Bilds mit großen Kontrasten bzw. mit einem hohen Dynamikbereich mit hoher Auflösung über den gesamten Dynamikbereich auf einem Darstellungsmedium mit begrenzter Dynamik wird zunächst der Inhalt des Bilds (18) vor der Darstellung mit einem Hochpassfilter gefiltert, wobei der Hochpassfilter derart gewählt wird, dass er eine nicht verschwindende Verstärkung für niederfrequente und konstante Bildanteile aufweist. Der Hochpassfilter wird durch gewichtete Subtraktion eines Bilds realisiert, das aus dem unkorrigierten Bildinhalt (18) durch Tiefpassfilterung (34) gewonnen wurde (Korrekturmaske). Die Korrekturmaske wird dabei höchstens für jedes zweite Bild einer Bildfolge berechnet. Durch diese Maßnahmen wird eine erhebliche Verringerung der für die Bildverarbeitung benötigten Rechenleistung erreicht.

Fig. 4

EP 1 326 431 A2

**Beschreibung**

Bildgeber und Sensoren, die Bilddaten mit hoher Signaldynamik erzeugen, haben das Problem, feine Kontrastunterschiede möglichst ohne Sättigungseffekte auf einem Darstellungsmedium mit begrenzter Auflösung zu visualisieren. Treten Sättigungseffekte auf, so werden lokale Bereiche übersteuert oder untersteuert, d. h. sie erscheinen strukturlos weiß oder strukturlos schwarz. Dadurch kommt es zu einer störenden Verfälschung lokaler Strukturen und Muster.

Wärmebildgeräte (WBG) erzeugen in der Regel Wärmebilder mit einer Auflösung bzw. Speichertiefe pro Pixel von 14 Bit. 14 Bit entsprechen ca. 16 000 Stufen in der Auflösung. Dies ermöglicht es, reale Szenen mit einem Temperaturkontrast von -50°C bis +100°C, also einer Temperaturdifferenz von 150K, mit einer Auflösung von theoretisch etwa 10mK zu erfassen. Dies kann beispielsweise eine Szene sein mit Flächenanteilen des Himmels (bis -50°C), Landschaftsanteilen (15°C bis 25°C) sowie Häusern oder Fahrzeugen (>40°C).

Normale Wiedergabegeräte, etwa Computermonitore, nutzen zur Darstellung einen Kontrast von 256 Graustufen entsprechend 8 Bit. Werden diese 8 Bit zur Darstellung eines linearen Ausschnitts der 14 Bit des WBG genutzt, so kann lediglich ein Temperaturausschnitt von wenigen K mit allen strukturellen Details dargestellt werden. D. h. bei Einstellen der Bildhelligkeit auf ca. 20°C können Konturen in der Landschaft erkannt werden, Fahrzeuge und Häuser sind jedoch übersteuert, also weiß, dargestellt, und kältere Bereiche sind untersteuert, also schwarz, dargestellt.

Dieses Problem kann gelöst werden, indem die Auflösung von - in dem genannten Beispiel - 10mK vergröbert wird auf etwa 0,5K. Dadurch kann der gesamte Dynamikumfang von -50°C bis +100°C linear dargestellt werden, allerdings mit geringer Auflösung.

Alternativ kann die Temperaturskala logarithmiert oder sonst wie nicht-linear verzerrt werden, um einzelne Temperatur-Bereiche zu Lasten anderer mit hoher Auflösung darzustellen. Dies betont jedoch einige Temperaturbereiche zu Lasten anderer.

Aufgabe der Erfindung ist es, die Darstellung einer Bildfolge mit großen Kontrasten bzw. mit einem hohen Dynamikbereich in den einzelnen Bildern mit hoher Auflösung über den gesamten Dynamikbereich auf einem Darstellungsmedium mit begrenzter Dynamik bei geringem Rechenaufwand zu ermöglichen, wobei eine hohe Detailtreue über den gesamten Dynamikbereich erhalten bleiben soll.

Diese Aufgabe wird durch die Erfindungen gemäß den unabhängigen Ansprüchen gelöst. Vorteilhafte Weiterbildungen der Erfindungen sind in den Unteransprüchen gekennzeichnet.

Erfindungsgemäß wird der Inhalt des Bilds vor der Darstellung zunächst mit einem Hochpassfilter gefiltert, um lokale Strukturen mit kleinen Kontrastunterschieden zu erhalten, große Kontrastunterschiede jedoch abzuschwächen. Der Hochpassfilter weist dabei eine nicht verschwindende Verstärkung für niederfrequente und konstante Bildanteile auf, damit großflächige Bereiche mit stark unterschiedlichen Helligkeits- bzw. Temperaturwerten nicht völlig angeglichen werden, sondern in ihren Unterschieden noch erkennbar bleiben.

Der Hochpassfilter wird nun nicht direkt berechnet, sondern durch gewichtete Subtraktion eines Bildes realisiert, das aus dem unkorrigierten Bildinhalt durch Tiefpassfilterung gewonnen wurde. Dieses gewonnene Bild wird im Folgenden Korrekturmaske genannt.

Ein Tiefpassfilter verlangt jedoch prinzipiell den gleichen Rechenaufwand wie ein Hochpassfilter. Die Ersetzung eines Hochpassfilters durch die gewichtete Subtraktion eines Tiefpassfilters führt somit noch nicht zu der gewünschten Verringerung des Rechenaufwands.

Entscheidend ist, dass die Korrekturmaske höchstens für jedes zweite Bild bzw. Halbbild einer Bildfolge berechnet wird. Möglich ist dies ohne nennenswerte Verzerrungen des Bilds, da bewegte Bilder sich in aller Regel von Bild zu Bild in kleineren räumlichen Strukturen (entsprechend hohen räumlichen Frequenzen) ändern mögen, jedoch größere Strukturen sich von einem Bild zum nächsten i. d. R. nur geringfügig ändern. Dies gilt insbesondere, wenn die Bewegung innerhalb des Bilds klein ist im Vergleich zur Kernelgröße des Tiefpassfilters.

Die berechnete Korrekturmaske kann somit auch zur Korrektur von nachfolgenden Bildern verwendet werden. Die Korrekturmaske wird also nicht in Echtzeit, sondern asynchron berechnet.

Bewährt hat sich eine Berechnung der Korrekturmaske etwa 8 bis 15 mal pro Sekunde. Die Rechenleistung reduziert sich dadurch etwa um einen Faktor vier.

Ferner wird zu jedem unkorrigierten Bild ein Offset-Bild zur Offset-Korrektur addiert bzw. subtrahiert, wie dies häufig geschieht. Dies kann in der Weise genutzt werden, dass die gewichtete Subtraktion der Korrekturmaske dadurch erfolgt, dass die Korrekturmaske vom Offset-Bild gewichtet subtrahiert bzw. zum Offset-Bild gewichtet addiert wird. Dazu können i. d. R. ohnehin vorhandene Hardware und Software-Routinen mit nur geringen Modifikationen genutzt werden.

Neben der geschickten Nutzung von vorhandener Hard- und Software kann zur weiteren Reduktion des Rechenaufwands die Tiefpassfilterung mit Hilfe der folgenden Schritte ausgeführt werden:

a) Faltung der unkorrigierten Bilddaten mit einem horizontalen Vektor $h=(h_1,...,h_n)=(1,...,1)$, der ausschließlich mit Einsen besetzt ist.

b) Faltung des Ergebnisses mit einem vertikalen Vektor $v = (v_1, ..., v_n) = (1, ..., 1)$, der ebenfalls ausschließlich mit Einsen besetzt ist.

c) Erneute Faltung des Ergebnisses mit dem horizontalen Vektor $h$.

d) Erneute Faltung des Ergebnisses mit dem vertikalen Vektor v.

Durch diese Vorgehensweise entfallen alle Multiplikationen. Dadurch reduziert sich die Rechenleistung weiter ganz erheblich.

Zusätzlich kann der Tiefpassfilter iterativ berechnet werden, indem zur Berechnung einer Komponente der horizontal oder vertikal gefalteten Matrix die unmittelbar benachbarten Komponenten der zu faltenden Matrix genutzt werden. Durch dieses Verfahren reduziert sich die Anzahl der Operationen für die Berechnung der Korrekturmaske pro Bildpunkt grundsätzlich auf 8 Operationen, nämlich zwei Additionen für jede der vier eindimensionalen Faltungen. Diese Anzahl ist zudem noch unabhängig von der Filterkernelgröße.

Die verbleibende Verarbeitungsleistung kann durchaus von heutigen Hochleistungs-Signalprozessoren bewältigt werden. Geeignete Signalprozessoren sind z. B. sogenannte digitale Signalprozessoren (DSP).

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:

Fig. 1    die Wirkung eines Hochpassfilters zweiter Ordnung;

Fig. 2    die Amplitude der Verstärkung V für die räumlichen Frequenzen f für einen Hochpassfilter zweiter Ordnung als Graph;

Fig. 3    die Übertragungsfunktion eines Tiefpassfilters in Kombination mit einer gewichteten Subtraktion als Funktion der räumlichen Frequenz f; und

Fig. 4    den schematischen Aufbau und die Kopplung der verschiedenen Komponenten der Bildverarbeitungs-Hardware einer üblichen Kamera.

Verbreitet ist der Einsatz von Hochpass- oder Tiefpassfiltern zur Reduzierung des Dynamik-Umfangs. In der Regel liefern Bildgeber, wie z. B. WBG, ein digitales Bild, das auf einem Darstellungsmedium wie einem Computermonitor angezeigt wird. Zur optimalen Darstellung wird das durch den Bildgeber erzeugte, unkorrigierte Bild mit Methoden der digitalen Bildverarbeitung behandelt, um ein korrigiertes Bild zu erzeugen, das trotz der begrenzten Dynamik des Darstellungsmediums in möglichst allen strukturellen Details auf dem Darstellungsmedium dargestellt werden kann. Die digitale Bildverarbeitung wird dabei in der Regel auf geeigneten Computern oder sonstigen Datenverarbeitungseinrichtungen durchgeführt.

Der Inhalt des unkorrigierten Bildes wird dabei vor der Darstellung mit einem Filter gefiltert. Häufig wird dazu ein Filter mit Gauß-Verteilung eingesetzt, der die räumlichen Frequenzen filtert.

Zunächst zu Gauß-Filtern allgemein. Sei $P = \{(r,s) | r = 1, ..., s = 1, ...\}$ die Menge der Pixel bzw. Bildpunkte $(r, s)$ und $b(r, s)$ bzw. $b_{rs}$ die Grauwertfunktion, d. h. eine Funktion, die die Grauwerte der Pixel des unkorrigierten Bilds B angibt. Dann lässt sich ein Gauß-Filter allgemein wie folgt konstruieren:

$$g_\sigma(t) \propto \exp\left(-\frac{t^2}{2\sigma^2}\right) \qquad (1)$$

ist - bis auf einen Normierungsfaktor - die Gauß-Funktion mit der Breite σ. Die korrigierten Grauwerte b' (r, s) ergeben sich bei Anwendung eines Gauß-Filters aus den unkorrigierten Grauwerten b(r, s) durch die Mittelung bzw. Faltung

$$b'_{rs} = \sum_{(p,q)\in P} g_\sigma\left(\left\|(r,s)-(p,q)\right\|\right) b_{pq} \qquad (2)$$

Dabei gibt $\|...\|$ den Abstand zwischen den Bildpunkten an. D. h. der Gauß-Filter gewichtet die Bildpunkte bei der Mittelung gemäß ihrem Abstand. Ein solcherart konstruierter Gauß-Filter ist ein Tiefpassfilter.

Der Gauß-Filter kann auch als Matrix bzw. Kernel G mit den Koeffizienten $g_{ij}$ ausgedrückt werden, wobei der einfacheren Schreibweise wegen i, j = -n, ..., -2, -1, 0, 1, 2, ..., n ist. Es gilt dann:

$$b'_{rs} = \sum_{i,j=-n}^{n} g_{ij}\ b_{r+i,s+j} \qquad\qquad (3)$$

Randeffekte, also die Tatsache, dass es z. B. am linken Rand eines Bildes B keine zur Linken benachbarte Pixel mehr gibt, können auf verschiedene Weise behandelt werden, z. B. durch periodisches Wiederholen des Bilds selbst an seinen Rändern oder durch Verlängern des Bilds um die benötigte Anzahl von Pixeln mit den Werten der letzten Pixel des Bilds.

Das korrigierte Bild B' ergibt sich somit aus dem unkorrigierten Bild B durch die Faltung mit dem Kernel G gemäß:

$$B' = G \otimes B \qquad\qquad (4)$$

Häufig wird ein spezieller Gauß-Hochpassfilter verwendet, der eine nicht verschwindende Verstärkung für niederfrequente und konstante (DC) Bildanteile aufweist. Ein Beispiel eines solchen Kernels G für n = 2 ist

$$G = \begin{pmatrix} -1 & -2 & -3 & -2 & -1 \\ -2 & -4 & -6 & -4 & -2 \\ -3 & -6 & m & -6 & -3 \\ -2 & -4 & -6 & -4 & -2 \\ -1 & -2 & -3 & -2 & -1 \end{pmatrix} \qquad\qquad (5)$$

dabei ist m eine natürliche Zahl, für die ein geeigneter Wert zu wählen ist, der weiter unten ermittelt wird.

Die Koeffizienten der ersten Zeile sind bis zur Mitte negative natürliche Zahlen in aufsteigender (bzw. absteigender) Reihenfolge. Jenseits der Mitte der Zeile wird die erste Zeile symmetrisch ergänzt. Die Koeffizienten der zweiten Zeile ergeben sich aus dem Zweifachen der ersten Zeile. Die der dritten Zeile aus dem Dreifachen. Die Matrix hat eine ungerade Anzahl von Zeilen und Spalten und ist insgesamt zentralsymmetrisch. Die hier beispielhaft angegebene Zahl von 5 Zeilen und Spalten kann auf beliebige n Zeilen und Spalten verallgemeinert werden.

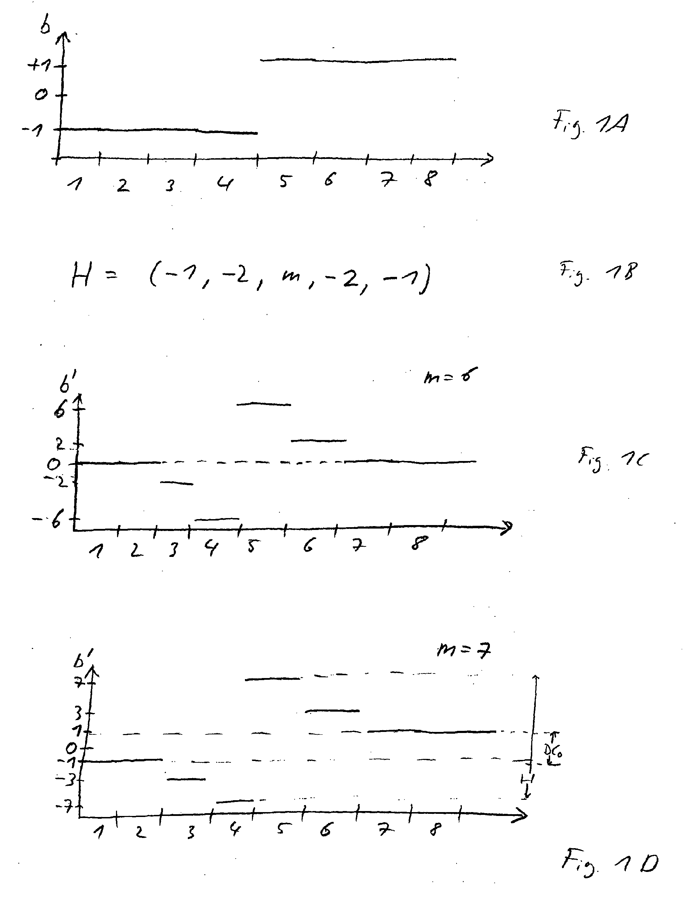

Die Wirkung des Hochpassfilters sei für einen eindimensionalen Fall in Fig. 1 erläutert.

Fig. 1A zeigt beispielhaft die Grauwerte b von Pixel 1 bis 8 eines linearen Arrays. Die Grauwerte nehmen hier beispielhaft lediglich die Werte -1 für die Pixel 1 bis 4 und die Werte +1 für die Pixel 5 bis 8 an. Fig. 1B zeigt den Kernel G für diesen eindimensionalen Fall. Fig. 1C zeigt für den Fall, dass der mittlere Wert m des Kernels auf m = 6 gesetzt wurde, die sich aus der Filterung ergebenden korrigierten Grauwerte b' für die Pixel 1 bis 8. Man erkennt, dass aus der Stufe der Fig. 1A eine beidseitig überhöhte Kante hervor gegangen ist. Ferner wurden die räumlich konstanten Anteile (DC-Anteile) auf den Wert 0 gefiltert. D. h. der Kernel G mit m = 6 filtert DC-Anteile vollständig aus und überhöht die Kanten. Er ist somit ein Hochpassfilter, und zwar ein Hochpassfilter zweiter Ordnung, da der Filter in etwa ein Bild der zweiten Ableitung der Grauwerte wiedergibt.

Der verwendete Filter ähnelt dem ebenfalls einsetzbaren sogenannten Laplace-Filter, der den Laplace-Operator nachbildet. Der Laplace-Filter wird üblicherweise dazu verwendet, Nullstellen in der zweiten Ableitung eines Bilds zu suchen.

Fig. 1D zeigt, ähnlich wie Fig. 1C, die korrigierten Grauwerte b', jedoch für den Fall m = 7. Wie in Fig. 1C, zeigt sich auch in Fig. 1D eine beidseitige Überhöhung der Kante. Die Überhöhung ist in Fig. 1D mit H bezeichnet. Sie ist etwas stärker als in Fig. 1C. Im Gegensatz zu Fig. 1C wurden im Falle von Fig. 1D jedoch die DC-Anteile nicht herausgefiltert. Sie wurden in ihrem Wert (- 1, + 1) erhalten. Die gesamte Verstärkung der DC-Anteile ist in Fig. 1D mit DCo bezeichnet.

Werden nun z. B. 8 Bit in der Darstellung dazu verwendet, den Bereich zwischen den Werten -2 und +2 darzustellen, so sind im korrigierten Bild der Fig. 1D sowohl die Helligkeitsunterschiede zwischen den beiden Extremen des ursprünglichen Bilds als auch die Kante zu erkennen, letztere etwas überhöht durch einen hellen und einen dunklen Schatten. D. h. der Kontrast des Bilds wird großflächig komprimiert, kleine, lokale Strukturen bleiben jedoch sichtbar.

Unter der Kompression K wird das Verhältnis:

$$K = \frac{Hochfrequenzverstärkung}{DC\text{-}Verstärkung} = \frac{H}{DC_0} \qquad (6)$$

verstanden. Im Fall der Fig. 1D, bei der m = 7 war, ergibt sich für K = 14 / 2 = 7. In diesem Fall zeigt sich K auch als der Verstärkungsfaktor für hochfrequente räumliche Bildanteile. Im Fall der Fig. 1C, bei der m = 6 war, ergibt sich für K = 14 / 0, also eine unendliche Kompression.

DCo und damit auch die Kompression K werden also durch m bestimmt. Damit der Kernel G der Faltung die Wirkung eines Hochpassfilters hat, muss der zentrale Koeffizient m stets so gewählt werden, dass

$$\sum_{i,j=-n}^{n} g_{ij} \geq 0 \qquad\qquad (7)$$

ist. Damit sich eine endliche Kompression, d. h. eine nicht verschwindende Verstärkung für DC-Anteile, ergibt, muss die Summe aller $g_{ij}$ echt größer als 0 sein. Für das oben geschilderte Beispiel des Kernels G wäre dann m ≥ 72 bzw. m > 72. Bei m = 72 wird die dargestellte Szene gleichmäßig an eine mittlere Szenenhelligkeit angepasst, was einem Kompressionsfaktor unendlich entspricht. Bei z. B. m = 79 wird im obigen Beispiel ein Kompressionsfaktor K von ca. 10 erreicht. Bei m = 216 wäre der Kompressionsfaktor K nur noch 1,5.

Der Kompressionsfaktor K = 10 erweitert die Erkennbarkeit von Feinstrukturen innerhalb von großen Flächen, deren Temperatur sich beispielsweise um 9K unterscheidet, dahingehend, dass die Feinstrukturen erkennbar bleiben, wenn die benachbarten großen Flächen sich in der Temperatur um 90K unterscheiden. In der Praxis hat sich ein Kompressionsfaktor von K = 4 bis 10 als sinnvoll erwiesen.

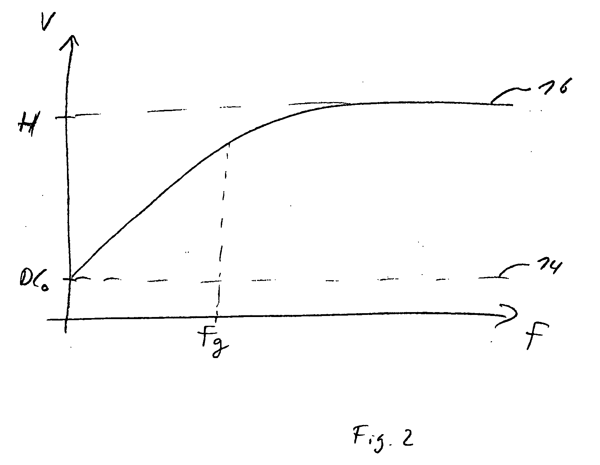

Für den Fall der Fig. 1D mit einer endlichen Kompression K zeigt Fig. 2 die Amplitude der Verstärkung V für die räumlichen Frequenzen f als Graph 16. Der Graph 16 konvergiert gegen die Hochfrequenzverstärkung H. Bei Abwesenheit eines Filters würden sämtliche Frequenzen f die Verstärkung DCo der DC-Anteile erfahren, wie es in der gestrichelten Linie 14 angedeutet ist.

Mit $f_g$ ist in Fig. 2 die Grenzfrequenz bezeichnet. Die Grenzfrequenz ist diejenige Frequenz, die mit einer etwa halben maximalen Verstärkung verstärkt wird. Die Grenzfrequenz $f_g$ hängt von der Größe (n, siehe oben) des Kernels G des Hochpassfilters ab, die auch Kernelgröße genannt wird. Je größer der Kernel, also n, desto größer ist die Grenzfrequenz, was zu einer verbesserten Abbildungstreue bei mittleren Strukturen bzw. Kontrastunterschieden führt, die nicht so stark überhöht werden. Eine Kernelgröße von 15x15 bis 65x65, entsprechend n = 7 bis 32, hat sich als geeignet erwiesen.

Die Wirkung eines solchen Hochpassfilters besteht somit effektiv darin, dass Flächen, die im Vergleich zur Kernelgröße groß sind, kaum verstärkt werden und damit im Endeffekt einer mittleren Helligkeit angenähert werden. Detaillierte Strukturen, die verglichen mit der Kernelgröße klein sind, werden jedoch effektiv verstärkt und damit deutlich dargestellt.

Das geschilderte Verfahren stellt extrem hohe Anforderungen an die Leistungsfähigkeit einer Bildverarbeitungshardware. Eine Kernelgröße von z. B. 65x65, entsprechend n = 32, bei einer Pixelrate von 14,75 MW/sec (MW = Mega-Wort, wobei "Wort" für die Speichertiefe eines Pixels steht, also z. B. 14 Bit), entsprechend dem CCIR-Normbild, erfordert pro Pixel 65x65 = 4225 14-Bit-Multiplikationen, aus praktischen Gründen jedoch 16-Bit-Multiplikationen, und ebenso viele 32-Bit-Additionen, sowie eine 32-Bit-Division zur Normierung. Dies entspricht einer Verarbeitungsleistung von ca. 121 Gops (Giga Operationen pro Sekunde).

Im Zusammenhang mit CCD-Kameras oder ähnlichen Kameras steht CCIR (Comité Consultatif International des Radio Communications) als Bezeichnung für eine Video-Norm zur Übertragung von Schwarz/Weiß-Bildern mit einer Bildwiederholfrequenz von 50 Halbbildern pro Sekunde und 625 Linien. Das volle Bild wird aus den Halbbildern zusammengesetzt. Die Halbbilder ergeben sich im sog. "interlace"-Verfahren. Dabei werden die Bilder "interlaced" ausgelesen, d. h. zunächst werden alle geraden Zeilen ausgelesen, im Anschluss daran alle ungeraden usw. Auf diese Weise kann trotz einer verhältnismäßig geringen Bildfrequenz (25 Bilder/sec. bei der CCIR-Norm) das Flimmern des Bilds auf dem Monitor gering gehalten werden.

Die benötigte Verarbeitungsleistung ist aus heutiger technischer Sicht nicht realisierbar. Außerdem werden die Bilddaten durch den Filter G in der Verarbeitungskette um mindestens die Dauer von n Bildzeilen verzögert, da zur Berechnung eines korrigierten Bildpunktes auch die n nachfolgenden Bildzeilen benötigt und damit abgewartet werden müssen.

Erfindungsgemäß wird daher der Inhalt des Bilds vor der Darstellung zunächst mit einem Hochpassfilter gefiltert, um lokale Strukturen mit kleinen Kontrastunterschieden zu erhalten, große Kontrastunterschiede jedoch abzuschwächen. Der Hochpassfilter weist dabei eine nicht verschwindende Verstärkung für niederfrequente und konstante Bildanteile auf, damit großflächige Bereiche mit stark unterschiedlichen Helligkeits- bzw. Temperaturwerten nicht völlig angeglichen werden, sondern in ihren Unterschieden noch erkennbar bleiben.

Der Hochpassfilter wird nun nicht direkt berechnet, sondern durch gewichtete Subtraktion eines Bildes realisiert, das aus dem unkorrigierten Bildinhalt B durch Tiefpassfilterung gewonnen wurde. Dieses gewonnene Bild wird im Folgenden Korrekturmaske genannt.

Die allgemeine Vorgehensweise zur Konstruktion von Tiefpassfiltern bzw. eines Gauß-Tiefpassfilters wurde eingangs im Zusammenhang mit den Gleichungen (1) bis (3) geschildert. Die konkrete Bildung z. B. eines Gauß-Tiefpassfilters erfolgt analog zu dem Kernel G gemäß Gleichung (5) mit der Ausnahme, dass das zentrale Element keine Sonderstellung einnimmt, sondern in der gleichen Weise gebildet wird, wie die übrigen Elemente. Ein Beispiel eines Kernels $G_T$ eines Tiefpassfilters ist

$$G_T = \begin{pmatrix} 1 & 2 & 3 & 2 & 1 \\ 2 & 4 & 6 & 4 & 2 \\ 3 & 6 & 9 & 6 & 3 \\ 2 & 4 & 6 & 4 & 2 \\ 1 & 2 & 3 & 2 & 1 \end{pmatrix} \qquad (8)$$

Ein solcher Tiefpassfilter bewirkt eine gewichtete Mittelung der Werte um einen Bildpunkt herum. Aus dem unkorrigierten Bild wird also zunächst eine Korrekturmaske $B_K$ gemäß

$$B_K = G_T \otimes B \qquad (9)$$

gebildet, mit deren Hilfe dann durch gewichtete Subtraktion das korrigierte Bild B' gemäß

$$B' = B - \alpha\, B_k = B - \alpha\, G_T \otimes B = (1 - \alpha\, G_T) \otimes B \qquad (10)$$

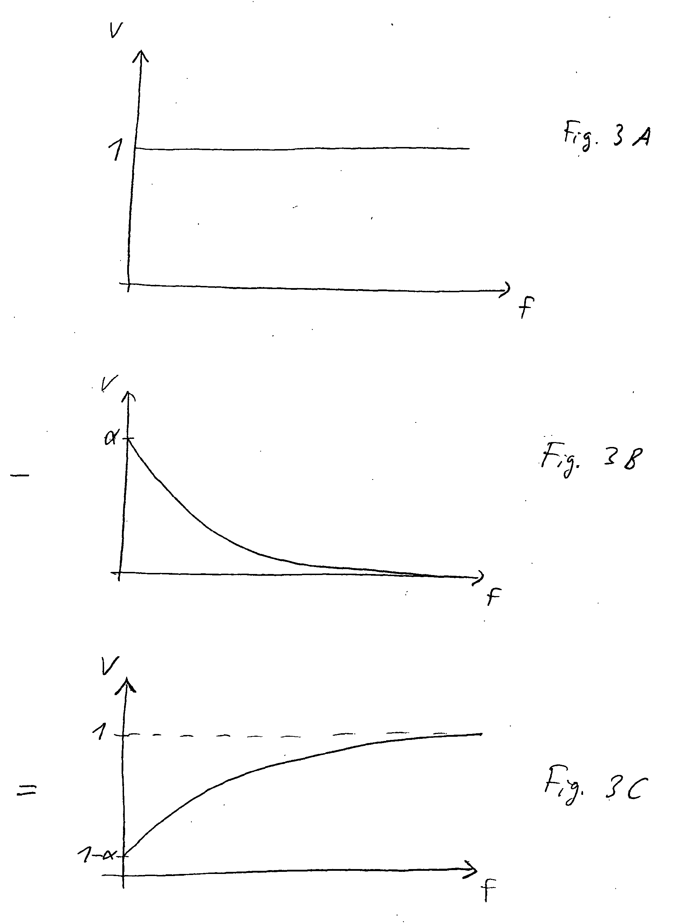

gewonnen wird. Dabei ist der Wichtungsfaktor $\alpha$ eine positive Zahl zwischen 0 und 1, deren Bedeutung aus Fig. 3 deutlich wird.

Fig. 3 zeigt die Übertragungsfunktion eines Tiefpassfilters in Kombination mit einer gewichteten Subtraktion als Funktion der räumlichen Frequenz f. Dabei ist in den einzelnen Teilen der Fig. 3 stets die Amplitude V der Verstärkung als Funktion der räumlichen Frequenzen f dargestellt.

Fig. 3A zeigt die Übertragungsfunktion der Identität. Jede räumliche Frequenz wird unverfälscht mit dem Verstärkungsfaktor V = 1 übertragen. Fig. 3B zeigt einen Tiefpassfilter, der lediglich die kleinste Frequenz unverfälscht überträgt und alle höheren Frequenzen abschwächt. Zusätzlich wurde die Übertragungsfunktion mit dem Wichtungsfaktor $\alpha$ multipliziert. Das Minuszeichen ("-") links der Fig. 3B deutet die Subtraktion des Tiefpassfilters gemäß Fig. 3B von der Identität gemäß Fig. 3A an. Das Ergebnis (angedeutet durch das "=") ist in Fig. 3C gezeigt. Es ergibt sich ein Hochpassfilter mit einer Verstärkung des DC-Anteils von 1 - $\alpha$.

Ein Vergleich der Fig. 3C und der Fig. 2 zeigt, dass

$$1-\alpha = \frac{DC_0}{H} = \frac{1}{K} \qquad (11)$$

unter Verwendung von Gleichung (6). Der Wichtungsfaktor $\alpha$ und die Kompression K hängen somit zusammen. $\alpha$ bestimmt die Kompression bzw. aus einer gewünschten Kompression ergibt sich $\alpha$.

Ein Tiefpassfilter verlangt jedoch prinzipiell den gleichen Rechenaufwand wie ein Hochpassfilter. Die Ersetzung eines Hochpassfilters durch die gewichtete Subtraktion eines Tiefpassfilters $G_T$ führt somit noch nicht zu der gewünschten Verringerung des Rechenaufwands.

Entscheidend ist, dass die Korrekturmaske $B_K$ höchstens für jedes zweite Bild bzw. Halbbild einer Bildfolge berechnet wird. Möglich ist dies ohne nennenswerte Verzerrungen des Bilds, da bewegte Bilder sich in aller Regel von Bild zu Bild in kleineren räumlichen Strukturen (entsprechend hohen räumlichen Frequenzen) ändern mögen, jedoch größere Strukturen sich von einem Bild zum nächsten i. d. R. nur geringfügig ändern. Dies gilt insbesondere, wenn die Bewegung innerhalb des Bilds klein ist im Vergleich zur Kernelgröße des Tiefpassfilters $G_T$.

Die berechnete Korrekturmaske $B_K$ kann somit auch zur Korrektur von nachfolgenden Bildern verwendet werden. Die Korrekturmaske $B_K$ wird also nicht in Echtzeit, sondern asynchron berechnet.

Bewährt hat sich eine Berechnung der Korrekturmaske $B_K$ etwa 8 bis 15 mal pro Sekunde. Die Rechenleistung reduziert sich dadurch etwa um einen Faktor vier.

Das erfindungsgemäße Verfahren kann bei den meisten Kameras auf einfache Weise in vorhandene Hardware integriert werden.

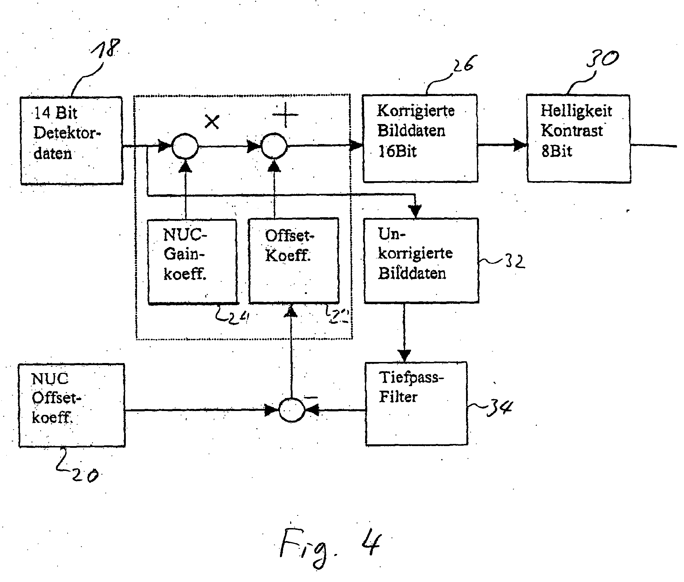

Fig. 4 zeigt den schematischen Aufbau und die Kopplung der verschiedenen Komponenten der Bildverarbeitungs-Hardware einer üblichen Kamera. Die von der Kamera aufgenommenen Bilddaten werden in einem Speicher 18 mit der von der Kamera unterstützten Speichertiefe gespeichert. Im vorliegenden Beispiel wird eine Speichertiefe von 14 Bit für die Kamera- bzw. Detektordaten angenommen. Um unterschiedliche Empfindlichkeiten der Pixel der Kamera auszugleichen, wird ein Bild üblicherweise einer pixelweise vorgenommenen Offset- und Gain-Korrektur unterworfen (siehe z. B. DE 43 05 251 C1). "Gain" bezeichnet dabei die Verstärkung. Eine solche Korrektur wird als Zweipunktkorrektur bezeichnet, da sie sowohl die Lage der Empfindlichkeitskurve des Pixels (Offset) als auch die Steigung der Empfindlichkeitskurve des Pixels (Gain) verändert. Das ganze Verfahren wird auch als NUC-Korrektur (Non-Uniformity-Correction) bezeichnet.

Die NUC-Korrektur erfolgt in der Weise, dass jedes Pixel mit einem gespeicherten NUC-Gain-Koeffizienten 24 multipliziert wird. Zusätzlich wird ein NUC-Offset-Koeffizienten-Bild 20, 22 zu den unkorrigierten Bilddaten 18 addiert. Dadurch wird die Offsetkorrektur bewirkt. Im Ergebnis erhält man korrigierte Bilddaten 26. Diese haben statt der ursprünglichen 14 Bit nun eine Dynamik von 16 Bit, da sowohl die Addition als auch die Multiplikation zu einer Erhöhung der Werte führen können. Anschließend werden aus den 16 Bit 8 Bit ausgewählt, um diesen Ausschnitt der 16 Bit auf einem Monitor darzustellen. Dies ist schematisch durch den 8-BitSpeicher 30 dargestellt.

Wenn ein WBG bereits zur Bildhomogenisierung die beschriebene Zweipunktkorrektur (NUC) zur Offset- und Gain-Korrektur jedes einzelnen Bildelementes aufweist, so kann der Hochpassfilter in einfacher Weise in diese Hardware integriert werden. Dazu werden die unkorrigierten Bilddaten 32 einer Tiefpassfilterung 34 unterworfen. Es ergibt sich daraus die Korrekturmaske $B_K$, die anschließend noch mit dem oben erwähnten Wichtungsfaktor $\alpha$ multipliziert wird. Das Ergebnis wird von den Offset-Korrektur-Koeffizienten 20 subtrahiert, um die tatsächlich verwendeten Offset-Koeffizienten 22 zu erhalten. Da die Offset-Koeffizienten 22 durch die vorhandene Hardware zu den unkorrigierten Bilddaten addiert werden, führt dies im Effekt zu einer gewichteten Subtraktion der Korrekturmaske $B_K$.

Auf diese Weise tritt keine Verarbeitungsverzögerung durch die Korrektur der Bilddaten auf, d. h. die Bildaufnahme und Korrektur können in Echtzeit erfolgen.

Bei wahlfreiem Zugriff auf den Bildspeicher kann die Berechnung der Korrekturmaske $B_K$ durch Ausnützen von Symmetrien des Tiefpassfilters $G_T$ und durch Wahl der oben beschriebenen Filterkoeffizienten (siehe z. B. Gleichung (8)) mit Hilfe von einfachen Vektoroperationen ausgeführt werden.

Zur Ausführung der Tiefpassfilterung genügen die folgenden Schritte:

e) Faltung der unkorrigierten Bilddaten mit einem horizontalen Vektor $h = (h_1, ..., h_n) = (1, ..., 1)$, der ausschließlich mit Einsen besetzt ist.

f) Faltung des Ergebnisses mit einem vertikalen Vektor $v = (v_1, ..., v_n) = (1, ..., 1)$, der ebenfalls ausschließlich mit Einsen besetzt ist.

g) Erneute Faltung des Ergebnisses mit dem horizontalen Vektor $h$.

h) Erneute Faltung des Ergebnisses mit dem vertikalen Vektor $v$.

Die Faltung des Bildes B mit einem horizontalen Vektor $(h \otimes_h B)$ ist dabei komponentenweise definiert durch:

$$\left(h \otimes_h B\right)_{rs} := \frac{\sum_{j=-n}^{n} h_j\, b_{r,s+j}}{2n + 1} \qquad (12)$$

Dabei gibt der Nenner die Anzahl der Summanden wieder und dient zur Normierung. Im vorliegenden Fall sind alle $h_j$ = 1, so dass folgt

$$\left(h \otimes_h B\right)_{rs} = \frac{\sum_{j=-n}^{n} b_{r.s+j}}{2n+1} \qquad (13)$$

In analoger Weise ist die Faltung des Bilds B mit einem vertikalen Vektor ($v \otimes_v B$) komponentenweise definiert durch:

$$\left(v \otimes_v B\right)_{rs} := \frac{\sum_{i=-n}^{n} v_i\, b_{r+i.s}}{2n+1} = \frac{\sum_{i=-n}^{n} b_{r+i.s}}{2n+1} \qquad (14)$$

unter Ausnutzung der Tatsache, dass alle $v_i$ = 1 sind. Statt einer zweidimensionalen Faltung genügen also vier eindimensionale Faltungen. Das Ergebnis ist identisch mit dem Ergebnis der Faltung mit einem der im Zusammenhang mit Gleichung (8) definierten Gauß-Tiefpassfilter.

Das Ergebnis ist die Korrekturmaske $B_K$. Durch anschließende Multiplikation mit dem Wichtungsfaktor $\alpha$ wird ein Bild erhalten, das - wie beschrieben - von den Offset-Korrektur-Koeffizienten subtrahiert wird.

Durch diese Vorgehensweise entfallen alle Multiplikationen. Dadurch reduziert sich die Rechenleistung weiter erheblich.

Auch die Division durch 2n+1 kann dadurch vermieden bzw. verlagert werden, dass sie in den Wichtungsfaktor $\alpha$ integriert wird, indem dieser durch (2n+1)^4 dividiert wird.

Eine noch weitere Reduktion der Rechenleistung kann z. B. aufgrund der folgenden Zusammenhänge erreicht werden:

$$\left(h \otimes_h B\right)_{rs} = \frac{\sum_{j=-n}^{n} b_{r.s+j}}{2n+1} = \frac{\sum_{j=-n}^{n} b_{r,(s-1)+j} + b_{r.s+n} - b_{r.s-(n+1)}}{2n+1}$$

$$= \left(h \otimes_h B\right)_{r.s-1} + \frac{b_{r.s+n}}{2n+1} - \frac{b_{r.s-(n+1)}}{2n+1} \qquad (15)$$

und

$$\left(v \otimes_v B\right)_{rs} = \frac{\sum_{i=-n}^{n} b_{r+i.s}}{2n+1} = \frac{\sum_{i=-n}^{n} b_{(r-1)+i.s} + b_{r+n,s} - b_{r-(n+1),s}}{2n+1}$$

$$= \left(v \otimes_v B\right)_{(r-1).s} + \frac{b_{r+n.s}}{2n+1} - \frac{b_{r-(n+1).s}}{2n+1} \qquad (16)$$

bzw. analoger Beziehungen für in anderen Richtungen benachbarte Komponenten.

Die Division durch (2n+1) kann, wie erwähnt, herausgezogen und in einen Normierungsschritt verlagert werden. Randeffekte können in der üblichen Weise gelöst werden.

D. h. zur Berechnung einer Komponente der horizontal oder vertikal gefalteten Matrix können die unmittelbar benachbarten Komponenten der zu faltenden Matrix genutzt werden. Durch dieses Verfahren reduziert sich die Anzahl der Operationen für die Berechnung der Korrekturmaske $B_K$ pro Bildpunkt grundsätzlich auf 8 Operationen, nämlich zwei Additionen für jede der vier eindimensionalen Faltungen. Diese Anzahl ist zudem noch unabhängig von der Filterkernelgröße.

Damit ist die Anforderung an die Rechenleistung erheblich geringer geworden und beträgt bei dem o. g. Beispiel nur noch 31 Mops (Millionen Operationen pro Sekunde).

Weiterhin besteht die Möglichkeit, bei Verwendung großer Kernelgrößen (n > 15) eine Reduktion der zu verarbeitenden Bildpunkte anzuwenden, da sich benachbarte Korrekturmaskenkoeffizienten aufgrund der Tiefpasseigenschaft nur geringfügig voreinander unterscheiden. D. h. es wird z. B. nur jeder zweite Bildpunkt horizontal und vertikal verwendet und dann jeweils für vier benachbarte Bildpunkte derselbe Maskenkorrekturwert verwendet. Dadurch kann die erforderliche Verarbeitungsleistung noch einmal deutlich (um ca. einen Faktor 3) reduziert werden.

Die verbleibende Verarbeitungsleistung kann durchaus von heutigen Hochleistungs-Signalprozessoren bewältigt werden. Geeignete Signalprozessoren sind z. B. sogenannte digitale Signalprozessoren (DSP).

Das erfindungsgemäße Verfahren ist nicht nur für Wärmebildgeräte bzw. Wärmebilder, sondern für jede Art von Bildern geeignet.

**Patentansprüche**

1.  Verfahren zum Darstellen einer Bildfolge mit großen Kontrasten bzw. mit einem hohen Dynamikbereich in den einzelnen Bildern mit hoher Auflösung über den gesamten Dynamikbereich auf einem Darstellungsmedium mit begrenzter Dynamik,

    a) wobei der Inhalt jedes Bilds (18) vor der Darstellung mit einem Hochpassfilter gefiltert wird;
    b) wobei der Hochpassfilter derart gewählt wird, dass er eine nicht verschwindende Verstärkung (DCo) für niederfrequente und konstante Bildanteile aufweist;
    c) wobei der Hochpassfilter durch gewichtete Subtraktion eines Bilds realisiert wird, das aus dem unkorrigierten Bildinhalt (18) durch Tiefpassfilterung (34) gewonnen wurde (Korrekturmaske) ;
    **dadurch gekennzeichnet**,
    d) dass die Korrekturmaske höchstens für jedes zweite Bild der Bildfolge berechnet wird;
    e) dass zu jedem unkorrigierten Bild (18) ein Offset-Bild (20) zur Offset-Korrektur addiert bzw. subtrahiert wird; und
    f) dass die gewichtete Subtraktion der Korrekturmaske dadurch erfolgt, dass die Korrekturmaske vom Offset-Bild (20) gewichtet subtrahiert bzw. zum Offset-Bild (20) gewichtet addiert wird.

2.  Verfahren zum Darstellen einer Bildfolge mit großen Kontrasten bzw. mit einem hohen Dynamikbereich in den einzelnen Bildern mit hoher Auflösung über den gesamten Dynamikbereich auf einem Darstellungsmedium mit begrenzter Dynamik,

    a) wobei der Inhalt des Bilds (18) vor der Darstellung mit einem Hochpassfilter gefiltert wird;
    b) wobei der Hochpassfilter derart gewählt wird, dass er eine nicht verschwindende Verstärkung (DCo) für niederfrequente und konstante Bildanteile aufweist;
    c) dass der Hochpassfilter durch gewichtete Subtraktion eines Bilds realisiert wird, das aus dem unkorrigierten Bildinhalt (18) durch Tiefpassfilterung (34) gewonnen wurde (Korrekturmaske) ;
    **dadurch gekennzeichnet**,
    d) dass die Korrekturmaske höchstens für jedes zweite Bild einer Bildfolge berechnet wird; und
    e) dass die Korrekturmaske in der folgenden Weise berechnet wird:

    i) Faltung der unkorrigierten Bilddaten mit einem horizontalen Vektor $h = (h_1, ..., h_n) = (1, ..., 1)$, der ausschließlich mit Einsen besetzt ist;
    ii) Faltung des Ergebnisses mit einem vertikalen Vektor $v = (v_1, ..., v_n) = (1, ..., 1)$, der ebenfalls ausschließlich mit Einsen besetzt ist;
    iii) erneute Faltung des Ergebnisses mit dem horizontalen Vektor h; und
    iv) erneute Faltung des Ergebnisses mit dem vertikalen Vektor v.

3.  Verfahren nach dem vorhergehenden Anspruch,
    **dadurch gekennzeichnet**,

**dass** zur Berechnung einer Komponente der horizontal oder vertikal gefalteten Matrix die unmittelbar benachbarten Komponenten der zu faltenden Matrix genutzt werden.

4. Verfahren nach einem der vorhergehenden Ansprüche,
   **dadurch gekennzeichnet,**
   **dass** zur Berechnung der Korrekturmaske benachbarte Pixel zusammengefasst werden oder unberücksichtigt bleiben.

5. Anordnung zum Darstellen einer Bildfolge mit großen Kontrasten bzw. mit einem hohen Dynamikbereich in den einzelnen Bildern mit hoher Auflösung über den gesamten Dynamikbereich auf einem Darstellungsmedium mit begrenzter Dynamik,

   a) mit einem Hochpassfilter zum Filtern des Inhalts jedes Bilds (18) vor der Darstellung;
   b) wobei der Hochpassfilter eine nicht verschwindende Verstärkung (DCo) für niederfrequente und konstante Bildanteile aufweist;
   c) mit Mitteln zum Realisieren des Hochpassfilters durch gewichtete Subtraktion eines Bilds, das aus dem unkorrigierten Bildinhalt (18) durch Tiefpassfilterung (34) gewonnen wurde (Korrekturmaske) ;
      **gekennzeichnet durch**
   d) Mittel zum Steuern der Berechnung der Korrekturmaske derart, dass die Korrekturmaske höchstens für jedes zweite Bild der Bildfolge berechnet wird;
   e) Mittel zum Addieren bzw. Subtrahieren eines Offset-Bildes (20) zur Offset-Korrektur jedes unkorrigierten Bildes (18); und **durch**
   f) Mittel zum Durchführen der gewichteten Subtraktion der Korrekturmaske derart, dass die Korrekturmaske vom Offset-Bild (20) gewichtet subtrahiert bzw. zum Offset-Bild (20) gewichtet addiert wird.

6. Anordnung zum Darstellen einer Bildfolge mit großen Kontrasten bzw. mit einem hohen Dynamikbereich in den einzelnen Bildern mit hoher Auflösung über den gesamten Dynamikbereich auf einem Darstellungsmedium mit begrenzter Dynamik,

   a) mit einem Hochpassfilter zum Filtern des Inhalts jedes Bilds (18) vor der Darstellung;
   b) wobei der Hochpassfilter eine nicht verschwindende Verstärkung (DCo) für niederfrequente und konstante Bildanteile aufweist;
   c) mit Mitteln zum Realisieren des Hochpassfilters durch gewichtete Subtraktion eines Bilds, das aus dem unkorrigierten Bildinhalt (18) durch Tiefpassfilterung (34) gewonnen wurde (Korrekturmaske) ;
      **gekennzeichnet durch**
   d) Mittel zum Steuern der Berechnung der Korrekturmaske derart, dass die Korrekturmaske höchstens für jedes zweite Bild der Bildfolge berechnet wird;
   e) Mittel zum Berechnen der Korrekturmaske in der folgenden Weise:

      i) Faltung der unkorrigierten Bilddaten mit einem horizontalen Vektor $h = (h_1, ..., h_n) = (1, ..., 1)$, der ausschließlich mit Einsen besetzt ist;
      ii) Faltung des Ergebnisses mit einem vertikalen Vektor $v=(v_1,...,v_n)=(1,...,1)$, der ebenfalls ausschließlich mit Einsen besetzt ist;
      iii) erneute Faltung des Ergebnisses mit dem horizontalen Vektor h; und
      iv) erneute Faltung des Ergebnisses mit dem vertikalen Vektor v.

Fig. 1A

$$H = (-1, -2, m, -2, -1)$$

Fig. 1B

$m = 6$

Fig. 1C

$m = 7$

Fig. 1D

Fig. 2

Fig. 3 A

Fig. 3 B

Fig. 3 C

18

26

30

| 14 Bit Detektor-daten | | Korrigierte Bilddaten 16Bit | Helligkeit Kontrast 8Bit |

X + 

NUC-Gain-koeff.

Offset-Koeff.

24

2?

Un-korrigierte Bilddaten

32

NUC Offset-koeff.

20

−

Tiefpass-Filter

34

Fig. 4